# EUROPEAN PATENT SPECIFICATION

(11) **EP 4 482 646 B1**
(45) Date of publication and mention of the grant of the patent: **06.08.2025**
(21) Application number: 23711765.0
(22) Date of filing: 20.02.2023
(51) Int. Cl.: B23Q 1/01

(54) **IMPROVED GANTRY MACHINE TOOL**
VERBESSERTE PORTALWERKZEUGMASCHINE
MACHINE-OUTIL À PORTIQUE AMÉLIORÉE

(30) Priority: 21.02.2022 IT 202200003164
(43) Date of publication of application: 01.01.2025
(73) Proprietor: HPT Sinergy S.r.l., 35131 Padova (IT)
(72) Inventor: PICCOLO, Gabriele, 35012 CAMPOSANPIERO (PD) (IT)
(74) Representative: Maroscia, Antonio
(86) International application number: PCT/IB2023/051526
(87) International publication number: WO 2023/156977

(56) References cited:
- EP-A1- 2 664 413
- FR-A1- 2 703 284
- FR-A1- 2 836 642

## Description

### Field of the invention

The present invention generally finds application in field of industrial processing machines and particularly relates to an improved gantry machine tool.

### Background Art

It has been long known in the industry of machine tools the use of a gantry comprising a pair of substantially vertical uprights joined atop by a transverse beam on which at least one tool holder head slides.

Generally, this type of machine tools comprises a substantially horizontal worktable on which a workpiece can be anchored and above which the tool holder head is movable.

Typically, each upright has a lower end provided with a carriage adapted to slide along a substantially longitudinal support structure.

A first drawback of these known gantry machines lies in that the support structures are anchored to the floor in a raised position with respect to the worktable or embedded in the floor therefore exposing the operator to greater risks of falling and injury.

Such configuration forces to use fixed or movable barricades positioned in proximity of the support structures and adapted to prevent the machine operators and/or staff members passing through from climbing over the support structures to reach the worktable while the machine is in operation.

Furthermore, even when the machine is shut down or inoperative and the barricades open so as to allow the operator to reach the work plane for routine operations for equipping it, the operator is forced to climb onto the support structure which basically represents an obstacle or however a step that is significantly wide to overcome to reach the worktable.

Still, another drawback of such type of machines lies in that each carriage is slidable on the respective support structure by means of guide means positioned on the upper surface of the structure in facing relationship with the transverse beam.

Such drawback compels to use telescopic covers or roller shutters for protecting the guide means and at least one pair of winders positioned at the longitudinal ends of each upright to roll up the covers or roller shutters and allow the sliding of the carriage along the support structure.

Notwithstanding, such cover and protection systems are not walkable given that they are slippery and inappropriate to bear the weight of an operator, with the ensuing need of having to be skirted around so as to reach the worktable.

Furthermore, the presence of different heights and protection systems significantly complicates the use of wheeled lifting means and access thereof to the worktable.

In order to at least partially overcome such drawbacks, there have been developed gangways provided with ladders adapted to allow the operator to overcome the difference in height created by the support structure and avoid walking on the protections of the guide means.

Despite this, such solutions are cumbersome and not cost-effective given that they increase installation and maintenance costs. FR 2 703 284 A1 discloses a gantry machine tool according to the preamble of claim 1.

### Technical problem

In the light of the prior art, the technical problem addressed by the present invention is to improve a gantry machine tool to increase the safety and accessibility for an operator and simultaneously reduce installation and maintenance costs.

### Summary of the invention

The object of the present invention is to solve the aforementioned problems by providing a gantry machine tool which is highly efficient and cost-effective.

A particular object of the present invention is to provide a gantry machine tool of the type indicated above which has a completely walkable lower portion.

Another object of the present invention is to provide a gantry machine tool of the type indicated above comprising support structures that are coplanar with the worktable.

A further object of the present invention is to provide a gantry machine tool of the type indicated above which comprises significantly reduced overall dimensions.

Another object of the present invention is to provide a gantry machine tool of the type indicated above which allows to reduce installation and maintenance costs.

A further object of the present invention is to provide a gantry machine tool of the type indicated above which allows to facilitate the access of the operator to the worktable during centring and equipping operations even by using wheeled lifting means.

Another object of the present invention is to provide a gantry machine tool of the type indicated above capable of increasing the safety of the working area avoiding potential accidents due to different heights.

The objects mentioned above and others which will be more apparent hereinafter are achieved by a gantry machine tool, according to claim 1, comprising a pair of substantially vertical uprights joined atop by a transverse beam on which at least one tool holder head is slidingly mounted, a worktable for anchoring a workpiece and above which said tool holder head is movable, and wherein each upright comprises a carriage adapted to slide along a substantially longitudinal support structure.

According to a peculiar aspect of the invention, the support structure comprises at least one horizontal surface coplanar to the worktable and at least one lateral surface embedded in the floor and provided with means for guiding the carriage.

Thanks to such combination of characteristics, the gantry machine tool does not have different heights and it has support structures that are perfectly coplanar with the worktable.

Furthermore, the absence of different heights enables the gantry machine to increase the safety of the working area avoiding potential accidents due to passing through obstacles and tripping.

Advantageously, the upper surface of the support structures is completely walkable given that the guide means comprise guides anchored on the lateral surface of the support means on which the skids installed on the carriage slide.

Suitably, between the carriage and the support structure there are interposed means for moving the carriage on the support structure.

Optionally, the movement means comprise a rack integral with the lateral surface and a pinion integral with the carriage or at least one linear motor.

Advantageous embodiments of the invention are attained according to the dependent claims.

### Brief description of the drawings

Further features and advantages of the invention will be more apparent in the light of the detailed description of a preferred but not exclusive embodiment of a gantry machine tool like the one mentioned above, shown by way of non-limiting example with reference to the attached drawings, wherein:
**FIG. 1** is a perspective view of the gantry machine according to the invention;
**FIG. 2** is a plan view of the machine of Fig. 1;
**FIG. 3** is a front view along the section III-III of the machine of Fig. 2;
**FIG. 4** is an enlarged schematic view of a detail of the machine of Fig. 3.

### Detailed description of a preferred embodiment

With particular reference to the figures, there is shown a gantry machine tool, indicated in its entirety with reference numeral **1,** for industrial processing operations, for example for removing material on semi-finished products or mechanical workpieces, generally made of metal.

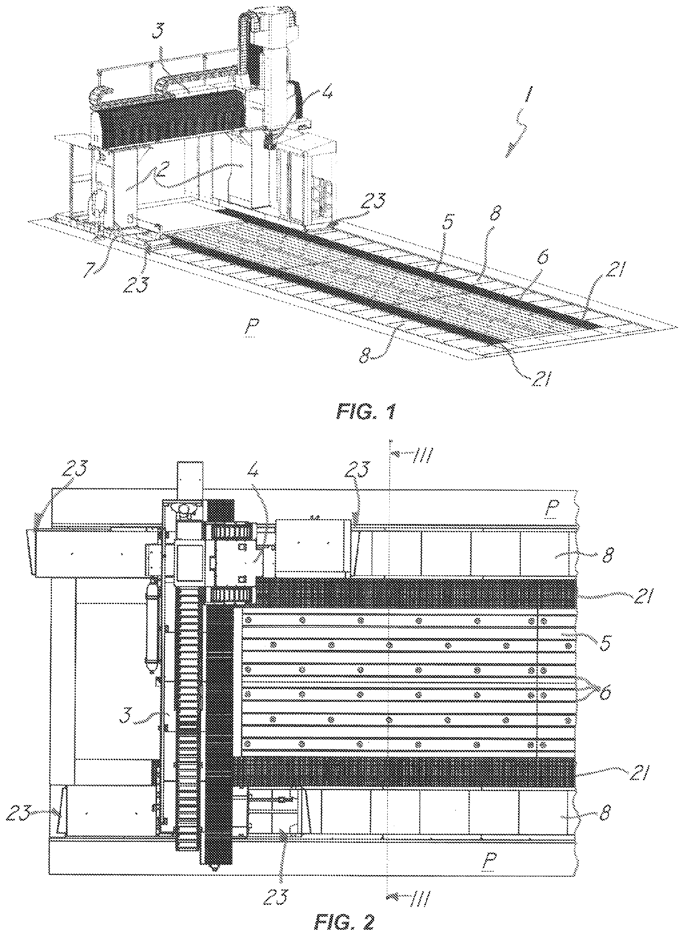

In its most essential embodiment, the machine **1** comprises a pair of substantially vertical uprights or walls **2** joined atop by a transverse beam **3** on which at least one tool holder head **4** slides, as better shown in **FIGS. 1-3****.**

Furthermore, the machine **1** comprises a substantially horizontal worktable **5** for anchoring a workpiece, not shown in the figures, and above which the tool holder head **4** is movable.

Optionally, the worktable **5** may be provided with grooves **6** at which the workpiece may be anchored in a conventional fashion.

Each upright **2** comprises a carriage **7** adapted to slide along a substantially longitudinal support structure **8.**

Hereinafter, the expression support structure **8** shall be used to indicate a substantially horizontal structure adapted to support the longitudinal movement of each upright **4** by means of the carriage **7,** such as for example a pallet or a base.

Preferably, the support structures **8** are arranged longitudinally adjacent to the worktable **5,** as better shown in **FIG. 2****.**

According to a peculiar aspect of the machine **1,** the support structure **8** comprises at least one horizontal surface **9** substantially coplanar to the worktable **5** and at least one lateral surface **10, 10'** embedded in the floor **P** and provided with guide means **11** for the carriage **7.**

Advantageously, the horizontal surface **9** of each support structure **8** is completely walkable.

Due to the absence of different heights between the horizontal surface **9** and the worktable **5,** the operator is facilitated in the access in the direction transverse to the worktable **5** during the equipping and centring operations without having to skirt around obstacles or the support structures **8.**

Furthermore, the coplanarity between the horizontal surface **9** of the support structure **8** and the worktable **5** allows to increase the safety of the working area avoiding potential accidents due to different heights.

Furthermore, the walkability of the horizontal surface **9** allows access to the worktable **5** even by using wheeled lifting means.

The advantages described heretofore would not have been achieved if the lateral walls **10, 10'** of the support structures **8** were even only partially lifted with respect to the floor **P** and to the worktable **5.**

Preferably, the guide means **11** comprise guides **12** anchored to the lateral surface **10, 10'** of the support structure **8** on which the skids **13** installed on the carriage **7** slide.

Furthermore, between the carriage **7** and the support structure **8** there are interposed movement means **14** for moving the carriage **7** on the support structure **8.**

The movement means **14** may comprise, by way of example, a rack **15** integral with the lateral surface **10, 10'** and a pinion **16** integral with the carriage **7,** preferably actuated by an electric motor **17.**

Alternatively, the movement means **14** may comprise equivalent movement systems of another type, for example with screw and nut screw, recirculating ball screws or linear motors, not shown in the figures.

It is clear that the particular conformation of the horizontal **9** and lateral surfaces **10, 10'** of the support structure **8** and their particular position with respect to the worktable **5,** allow to avoid using devices for protecting the guide means **11** and/or the movement means **14** from being walked on by the staff, allowing improvement and cost-effectiveness in the construction, installation and maintenance of the machine.

As a matter of fact, it has been observed that the costs relating to excavation works to embed the support structures **8** in the floor **P,** while maintaining the horizontal surface **9** coplanar with that of the worktable **5,** are much lower than those that would be needed for the installation and maintenance of the known means for protecting the guide means **11** and/or the movement means **14** from walking thereon by the staff.

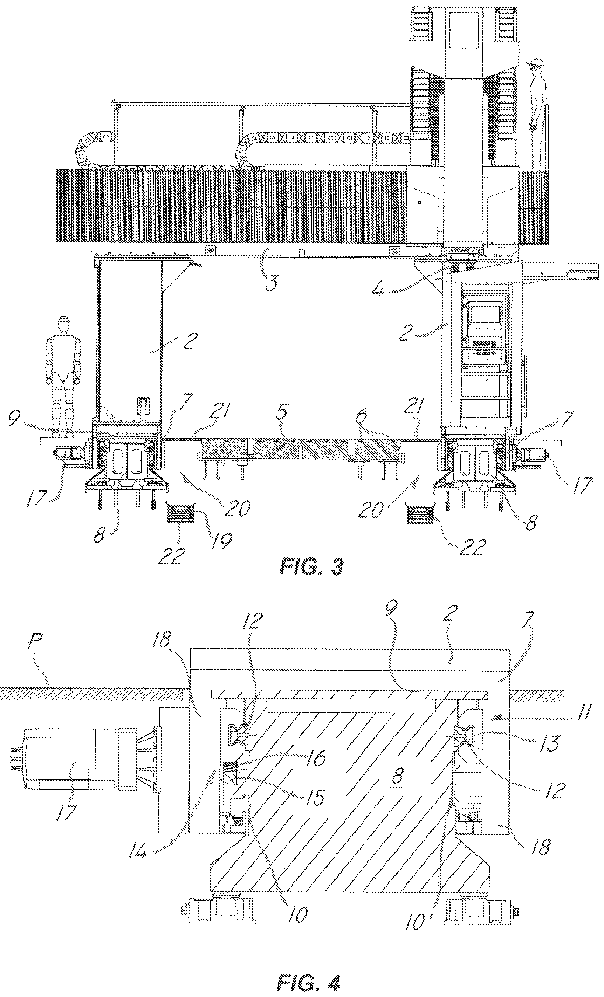

In a preferred embodiment of the invention, schematically shown in **FIG. 4****,** the support structure **8** is monolithic and it comprises a polygonal, preferably rectangular, cross-section.

In this embodiment, the carriage **7** has a substantially inverted-U or inverted-Y cross section and with at least one side portion **18** facing the lateral surface **10, 10'.**

In an alternative embodiment of the machine **1,** not shown in the figures, the support structure **8** may comprise a trapezoidal cross-section and the carriage **7** a substantially inverted-Y cross-section.

As better visible in **FIGS. 2** and **3****,** the support structure **8** is spaced from the worktable **5.**

Preferably, between the support structure 8 and the worktable 5 there is a gutter **19** for collecting processing chips, the gutter being suitable to be housed in a pit **20** arranged below the worktable **5.**

Furthermore, the gutter **19** is preferably covered by a walkable grid **21** and the bottom of the gutter **19** may comprise means **22** for collecting and transporting the processing chips outside the working area.

Optionally, suitable scrapers or removal devices **23** adapted to remove any processing chips from the horizontal surface 9 and push them toward the gutter **19** or outside the working area of the machine 1 may be installed between each carriage 7 and the support structure **8.**

Such scrapers or removal devices may be of the mechanical type and operative during the movement of the upright **2** along the respective support structure **8,** as better shown in **FIG. 4****,** or of the automatic and telescopic type.

In the light of the above it is clear that the gantry machine tool according to the invention achieves the pre-established objects and in particular it allows to increase the safety and accessibility for an operator of the machine while simultaneously decreasing installation and maintenance costs.

The machine according to the invention is susceptible to numerous modifications and variants all falling within the inventive concept outlined in the attached claims.

Even though the machine has been described with reference to the attached figures, the reference numbers utilised in the description and in the claims are meant for improving the intelligibility of the invention and thus do not limit the claimed scope of protection in any manner whatsoever.

Throughout the description, reference to "an embodiment" or "the embodiment" or "some embodiments" indicates that a particular characteristic, structure or element described is comprised in at least one embodiment of the object of the present invention.

Furthermore, the particular characteristics, structures or elements may be combined in any appropriate fashion in one or more embodiments.

### Industrial applicability

The present invention can be applicable at industrial level in that it can be produced in an industrial scale by industries belonging to the field of machine tools for industrial processing operations.

## Claims

1. A gantry machine tool (**1**), comprising a pair of substantially vertical uprights (**2**) joined atop by a transverse beam (**3**) on which at least one tool holder head (**4**) is slidingly mounted, a worktable (**5**) for anchoring a workpiece and above which said tool holder head (**4**) is movable, wherein each upright (**2**) comprises a carriage (**7**) adapted to slide along a substantially longitudinal support structure (**8**);
wherein said support structure (**8**) comprises at least one horizontal surface (**9**) substantially coplanar to said worktable (**5**) and **characterized in that** said support structure (**8**) comprises at least one lateral surface (**10, 10'**) embedded in the floor (**P**) and provided with guide means (**11**) for said carriage (**7**).

2. Machine as claimed in claim 1, **characterized in that** said horizontal surface (**9**) is completely walkable.

3. Machine as claimed in claim 1, **characterized in that** said guide means (**11**) comprise guides (**12**) anchored to said lateral surface (**10, 10'**) on which skids (**13**) installed on said carriage (**7**) slide.

4. Machine as claimed in claim 1, **characterized in that** between said carriage (**7**) and said support structure (**8**) there are interposed movement means (**14**) for moving said carriage (**7**) on said support structure (**8**).

5. Machine as claimed in claim 4, **characterized in that** said movement means (**14**) comprise a rack (**15**) integral with said lateral surface (**10, 10'**) and a pinion (**16**) integral with said carriage (**7**).

6. Machine as claimed in claim 4, **characterized in that** said movement means (**14**) comprise at least one linear motor.

7. Machine as claimed in claim 1, **characterized in that** said support structure (**8**) is monolithic and comprises a polygonal, preferably rectangular or trapezoidal cross section.

8. Machine as claimed in claim 7, **characterized in that** said carriage (**7**) has a substantially inverted-U or inverted-Y cross section and with at least one side portion (**18**) facing said lateral surface (**10, 10'**).

9. Machine as claimed in claim 1, **characterized in that** said support structure (**8**) is spaced from said worktable (**5**).

10. Machine as claimed in claim 9, **characterized in that** between said support structure (**8**) and said worktable (**5**) there is a gutter (**19**) for collecting the processing chips, said gutter (**19**) being suitable to be housed in a pit (**20**) and being covered by a walkable grid (**21**).

11. Machine as claimed in claim 10, **characterized in that** the bottom of said gutter (**19**) comprises means for collecting and transporting (**22**) the processing chips.

## Patentansprüche

1. Portal-Werkzeugmaschine (1) mit einem Paar im Wesentlichen vertikaler Ständer (2), die oben durch einen Querträger (3) verbunden sind, an dem mindestens ein Werkzeughalterkopf (4) gleitend angebracht ist, einem Arbeitstisch (5) zum Verankern eines Werkstücks, über dem der Werkzeughalterkopf (4) beweglich ist, wobei jeder Ständer (2) einen Schlitten (7) umfasst, der so beschaffen ist, dass er entlang einer im Wesentlichen längs verlaufenden Stützstruktur (8) gleitet;
wobei die Stützstruktur (8) mindestens eine horizontale Fläche (9) umfasst, die im Wesentlichen koplanar zu dem Arbeitstisch (5) ist, und **dadurch gekennzeichnet, dass** die Stützstruktur (8) mindestens eine Seitenfläche (10, 10') umfasst, die in den Boden (P) eingebettet und mit Führungsmitteln (11) für den Schlitten (7) versehen ist.

2. Maschine nach Anspruch 1, **dadurch gekennzeichnet, dass** die horizontale Fläche (9) vollständig begehbar ist.

3. Maschine nach Anspruch 1, **dadurch gekennzeichnet, dass** die Führungsmittel (11) an der Seitenfläche (10, 10') verankerte Führungen (12) umfassen, auf denen auf dem Wagen (7) installierte Kufen (13) gleiten.

4. Maschine nach Anspruch 1, **dadurch gekennzeichnet, dass** zwischen dem Wagen (7) und der Tragstruktur (8) Bewegungsmittel (14) zum Bewegen des Wagens (7) auf der Tragstruktur (8) angeordnet sind.

5. Maschine nach Anspruch 4, **dadurch gekennzeichnet, dass** die Bewegungsmittel (14) eine mit der Seitenfläche (10, 10') fest verbundene Zahnstange (15) und ein mit dem Schlitten (7) fest verbundenes Ritzel (16) umfassen.

6. Maschine nach Anspruch 4, **dadurch gekennzeichnet, dass** die Bewegungsmittel (14) mindestens einen Linearmotor umfassen.

7. Maschine nach Anspruch 1, **dadurch gekennzeichnet, dass** die Tragstruktur (8) monolithisch ist und einen polygonalen, vorzugsweise rechteckigen oder trapezförmigen Querschnitt aufweist.

8. Maschine nach Anspruch 7, **dadurch gekennzeichnet, dass** der Schlitten (7) einen im Wesentlichen invertierten U- oder invertierten Y-Querschnitt aufweist und mit mindestens einem Seitenabschnitt (18) der Seitenfläche (10, 10') zugewandt ist.

9. Maschine nach Anspruch 1, **dadurch gekennzeichnet, dass** die Stützstruktur (8) von dem Arbeitstisch (5) beabstandet ist.

10. Maschine nach Anspruch 9, **dadurch gekennzeichnet, dass** zwischen der Tragstruktur (8) und dem Arbeitstisch (5) eine Rinne (19) zum Sammeln der Bearbeitungsspäne vorhanden ist, wobei die Rinne (19) geeignet ist, in einer Grube (20) untergebracht zu werden und von einem begehbaren Gitter (21) abgedeckt ist.

11. Maschine nach Anspruch 10, **dadurch gekennzeichnet, daß** der Boden der Rinne (19) Mittel zum Sammeln und Transportieren (22) der Bearbeitungsspäne aufweist.

## Revendications

1. Machine-outil à portique (1), comprenant une paire de montants (2) sensiblement verticaux reliés entre eux par une poutre transversale (3) sur laquelle au moins une tête porte-outil (4) est montée coulissante, une table de travail (5) pour l'ancrage d'une pièce à usiner et au-dessus de laquelle ladite tête porte-outil (4) est mobile, dans laquelle chaque montant (2) comprend un chariot (7) adapté pour glisser le long d'une structure de support (8) sensiblement longitudinale;
dans laquelle ladite structure de support (8) comprend au moins une surface horizontale (9) sensiblement coplanaire à ladite table de travail (5) et **caractérisée en ce que** ladite structure de support (8) comprend au moins une surface latérale (10, 10') encastrée dans le sol (P) et pourvue de moyens de guidage (11) pour ledit chariot (7).

2. Machine selon la revendication 1, **caractérisée par le fait que** ladite surface horizontale (9) est entièrement praticable.

3. Machine selon la revendication 1, **caractérisée en ce que** lesdits moyens de guidage (11) comprennent des guides (12) ancrés à ladite surface latérale (10, 10') sur lesquels glissent des patins (13) installés sur ledit chariot (7).

4. Machine selon la revendication 1, **caractérisée par le fait qu'**entre ledit chariot (7) et ladite structure de support (8) sont interposés des moyens de déplacement (14) pour déplacer ledit chariot (7) sur ladite structure de support (8).

5. Machine selon la revendication 4, **caractérisée en ce que** lesdits moyens de déplacement (14) comprennent une crémaillère (15) solidaire de ladite surface latérale (10, 10') et un pignon (16) solidaire dudit chariot (7).

6. Machine selon la revendication 4, **caractérisée par le fait que** les moyens de déplacement (14) comprennent au moins un moteur linéaire.

7. Machine selon la revendication 1, **caractérisée en ce que** ladite structure de support (8) est monolithique et comporte une section polygonale, de préférence rectangulaire ou trapézoïdale.

8. Machine selon la revendication 7, **caractérisée en ce que** ledit chariot (7) présente une section transversale en forme de U ou de Y inversé et au moins une partie latérale (18) orientée vers ladite surface latérale (10, 10').

9. Machine selon la revendication 1, **caractérisée en ce que** ladite structure de support (8) est espacée de ladite table de travail (5).

10. Machine selon la revendication 9, **caractérisée par le fait qu'**entre ladite structure de support (8) et ladite table de travail (5) se trouve une gouttière (19) pour la collecte des copeaux de traitement, ladite gouttière (19) étant apte à être logée dans une fosse (20) et étant recouverte d'une grille praticable (21).

11. Machine selon la revendication 10, **caractérisée par le fait que** le fond de la gouttière (19) comprend des moyens de collecte et de transport (22) des copeaux de traitement.
